# EUROPEAN PATENT SPECIFICATION

(11) **EP 2 632 972 B1**
(45) Date of publication and mention of the grant of the patent: **19.03.2014**
(21) Application number: 11779914.8
(22) Date of filing: 21.10.2011
(51) Int. Cl.: C08J 3/22, C08K 3/34, C08L 23/04, C08L 23/10

(54) **NUCLEATING AGENT FOR POLYETHYLENES**
NUKLEIERUNGSMITTEL FÜR POLYETHYLENE
AGENT DE NUCLÉATION POUR POLYÉTHYLÈNES

(30) Priority: 25.10.2010 US 406331 P
(43) Date of publication of application: 04.09.2013
(73) Proprietor: Applied Minerals Inc., New York, New York 10012 (US)
(72) Inventor: KHANNA, Yash, P., Roswell Georgia 30076 (US); DHARIA, Amit, Irving Texas 75063 (US); ZEITOUN, Andre, M., New York New York 10012 (US)
(74) Representative: Holme Patent A/S
(86) International application number: PCT/US2011/057268
(87) International publication number: WO 2012/061041

(56) References cited:
- US-A1- 2003 130 364
- US-A1- 2005 106 378
- ZHIXIN JIA, YUANFANG LUO, BAOCHUN GUO, BINGTAO YANG, MINGLIANG DU & DEMIN JIA: "Reinforcing and Flame-Retardant Effects of Halloysite Nanotubes on LLDPE", POLYMER-PLASTICS TECHNOLOGY AND ENGINEERING, vol. 48, no. 6, 20 May 2009 (2009-05-20), pages 607-613, XP008148125, DOI: 10.1080/03602550902824440
- MINGLIANG DU ET AL: "Effects of halloysite nanotubes on kinetics and activation energy of non-isothermal crystallization of polypropylene", JOURNAL OF POLYMER RESEARCH, KLUWER ACADEMIC PUBLISHERS-CONSULTANTS BUREAU, NL, vol. 17, no. 1, 22 April 2009 (2009-04-22) , pages 109-118, XP019771955, ISSN: 1572-8935

## Description

### BACKGROUND

The invention relates to nucleating agents for promoting the crystallization rate of polyethylenes on cooling from the molten state, and to the polyethylenes containing the nucleation agent(s). Another aspect of this invention relates to a master batch of polyethylenes which contain the nucleating agent(s). The invention also relates to articles of manufacture formed totally or in part from the polyethylenes which contain the nucleating agent(s). In particular, the naturally occurring halloysite nanotubular (HNT) clay has been found to be an effective nucleating agent for enhancing the crystallization rate of such polyethylenes (PEs) as well as other polyolefins such as polypropylene (PP).

Customary fabricating procedures used with polyethylene such as injection molding, which include a rapid cooling from the melt, generally result in articles which contain the different crystalline structural forms to a varying degree depending upon the thermal history of the article. It is known that a greater degree of crystallinity is obtained when polyethylenes are cooled extremely slowly from the melt; however, under these conditions, large spherulites develop, moreover the process is not economical. Crystallinity and the uniformity of the morphological structure can also be enhanced by annealing treatments after solidification. However, such practices are not economically feasible in ordinary industrial fabricating procedures as, for example, injection molding.

The "super" or morphological structure in which the crystalline units are arranged, affects the physical properties of these type polymers. The crystalline units are arranged in polycrystalline aggregates known as spherulites. These spherulites may be detected by microscopic examination under polarized light. They are characterized by a more or less symmetrical growth in all directions from a nucleus and are composite structures made up of crystalline and amorphous regions. The number and size of the spherulites determines the texture or graininess in the bulk of the material and influences optical as well as physical properties. Physical properties improve with increasing homogeneity and fineness of the spherulitic structure throughout the bulk of the material.

To obtain optimum physical properties in articles fabricated from polymers such as polyethylenes, it is desirable, therefore, to produce a highly crystalline material, crystallized with an extremely fine, dense and uniform morphological structure. Among the physical properties affected by increased crystallinity and improved morphological structure are abrasion resistance, heat distortion temperature, inherent stability or resistance to deformation, resistance to hot water, coefficient of expansion, hardness, tensile yield strength and surface hardness.

Nucleation by foreign materials has been extensively studied, especially in the case of polypropylene. For example, H.N. Beck or H.D. Led better, J. Appl. Polym. Sci. 9, 2131 (1965) and H.N. Beck, J. Appl Polym. Sci. 11,673 (1987) checked the nucleation activity of more than two hundred substances by determining the temperature, Tcc, at which the crystallization rate on cooling is the fastest. F.L. Binsbergen, Polymer, 11, 253 (1970) extended these studies in testing two thousand substances for nucleating activity in polyethylene, polypropylene, poly(4-methyl-1-pentene) and poly(styrene). Other working nucleating agents for polyolefins are described by J.P. Mercier, Polymer Engineering and Science, 30, 270 (1990), Wijga, P.W.O. U.S. Pat. No. 3,207,735; -6; -8(1960) Wijga, P.W.O. and Binsbergen, F.L. U.S. Pat. No. 3,299,029(1961) Wales, M. U.S. Pat. No. 3,207,737; - (1961-62) Binsbergen, F.L. U.S. Pat. Nos. 3,326,880; 3,327,020; -1(1963) Kargin, V.A. et al, Dokl. Akad. Nauk. SSSR 1964, 156, 1156(transl.: Dokl. Phys. Chem. 1964, 156, 621, 644) Doring, C. and Schmidt, H. German Pat.(Federal Rep.) 1,188,279(1963) and Vonk, G.C. Kolloid Z. 1965, 206, 121.

The function of nucleating agents when cooling semi-crystalline polymers from the molten state into the solid form is to increase the number of nuclei formed in a given time interval at a predetermined temperature. The final and overall crystallinity, however, depends not only on the number of nuclei that are formed but also on the spherulitic growth rate from such nuclei. As noted above, spherulites develop with respect to a center, or nucleus, of growth. Addition of the nucleating agents thus provides a large number of sites for growth upon cooling from a melt. In order to be of practical use, such nucleating agents not only must produce a fine spherulitic structure but also must do this under conditions of rapid cooling to a temperature above the glass transition temperature of the polymer, i.e., they must reduce the time that is necessary under a given set of conditions for crystallization to start. This time is usually referred to as "induction time". Subsequent growth from the spherulitic center depends on the polymer chain mobility. Thus, a factor in the spherulitic growth rate is the macroscopic viscosity of the polymer and its temperature dependence. All segmental motion is "frozen in" at the glass transition temperature (Tg) and no additional crystallization occurs even when nuclei are present. This Tg is about - 110°C for high density polyethylene.

In differential scanning calorimetry (DSC), the crystallization temperature upon cooling from the molten state (T_{cc},°C) is a useful parameter since all the practical processes take place under no-isothermal conditions. In programmed cooling, the crystallization temperature reflects the overall crystallization rate due to the combined effects of nucleation and growth. The T_{cc} which is a characteristic of a particular polymer can be varied over a narrow range for that polymer. Variables that increase the rate of crystallization, for example nucleating agents, increase the T_{cc}. Similarly, variables that decrease the rate of crystallization, for example higher molecular weight, decrease the T_{cc}. Such a screening of variables affecting crystallization rate is relatively straightforward as long as the polymer melting temperature is not altered to any significant extent. A full description of this methodology has been published elsewhere [A Barometer of Crystallization Rates of Polymeric Materials, Y. P. Khanna, Polymer Engineering and Science, 30(24), 1615, (1990*)].* Also, one needs to be aware of the role of processing history of the plastic that can have an influence on the crystallization rate of the polymer and thus, the T_{cc} transition [Memory Effects in Polymers.II. Processing History vs Crystallization Rate of Nylon 6 - Observation of Phenomenon and Product behavior Y.P. Khanna, et. al., Polymer Engineering and Science, 28(24), 1600, (1988*)].*

The rate of crystallization is of basic importance in polymer fabrication operations such as spinning, extrusion, compression, injection molding, and in the processing of clear films. Typically, for a given polymer system, a faster crystallization rate leads to shorter cycle times and thus, enhanced productivity in molding operations. Also, in the extrusion of plastics films, a faster crystallization rate results in the formation of smaller and poorly developed crystals that results in improved optics. In addition, a faster crystallization rate reduces if not eliminates post-fabrication dimensional changes arising from secondary crystallization. This dictates the need to monitor the changes in the crystallization rate of a polymer brought about by modifiers such as nucleating agents.

Since the invention of polyethylenes in the 1930's, it has been very difficult to identify nucleating agents for polyethylenes, in part because polyethylene is already the fastest crystallization polymer only exceeded by polytetrafluoroethylene. Only in recent years, Milliken & Company has introduced their nucleating agent Hyperform HPN-20E for polyethylenes. It is helpful to have suitable nucleating agents when improved properties are desired or when molding certain intricate or difficult to mold parts. The present invention now introduces yet another class of nucleating agents that are useful for such purposes.

### SUMMARY OF THE INVENTION

Generally, the invention relates to a polyethylene composition having dispersed therein a nucleating effective amount of a nucleating agent comprising one or more finely divided inorganic materials in an amount of about 0.01 to about 80 weight percent, preferably 0.1 to 2 weight percent and more preferably 0.1 to a maximum of 1 weight percent based on the total weight of polyethylene and agent. The nucleating agent typically has a median particle size (d₅₀) of about 0.01 to 20 micron and preferably 0.1 to 1.2 micron. The composition can also include one or more of a filler, plasticizer, flow aid or pigment.

The invention also relates to a master batch of the polyethylene compositions disclosed herein wherein the nucleating agent is present in amounts of 5 to 80%. Preferred polyethylenes are based on ethylene building blocks that include polymeric materials and are known as high density polyethylene (HDPE), linear low density polyethylene (LLDPE), low density polyethylene (LDPE), copolymers where ethylene is the predominant chemical entity, and polyethylene polymerized via metallocene catalysts.

In addition, the invention also relates to improvements in a method of molding or extruding a polyethylene composition. These improvements include formulating the polyethylene composition as disclosed herein or from a master batch of such compositions in order to increase the melt-crystallization temperature (Tcc) by at least about 1 to 3°C under the DSC testing conditions described herein. This results in improved properties of the molded material as well as its ability to be used successfully to extrude or mold thin, intricate or complex parts.

The invention further relates to a method of increasing the melt-crystallization temperature (Tcc) of a polyethylene which comprises adding thereto a nucleating agent of an inorganic material comprising halloysite in a nucleation effective amount to obtain an increase in melt-crystallization temperature at least about 1 to 3°C compared to polyethylenes that do not contain the nucleating agent.

The nucleating agent is preferably a halloysite nanotubular clay having a median particle size (d₅₀) of about 0.01 µm to about 20 µm and it is present in the polyethylene in an amount of from about 0.1 to 2% and preferably in an amount of from about 0.1 to 1%. Also, the halloysite is typically present as the sole nucleating agent in the polyethylene.

Yet another embodiment of the invention is directed to an improvement in the methods of molding a polyolefin composition. The improvement comprises formulating the polyolefin composition to include therein a nucleating effective amount of a nucleating agent comprising one or more finely divided inorganic materials comprising halloysite in an amount of about 0.01 to about 80 weight percent based on the total weight of polyethylene and agent, with the nucleating agent dispersed in the polyolefin such that the injection molding cycle time is reduced by at least 10 to 25% compared to polyolefin compositions that do not contain the nucleating agent. As above, the preferred nucleating agent is halloysite nanotubular clay having a median particle size (d₅₀) of about 0.01 µm to about 20 µm and being present in an amount of from about 0.1 to 2% and preferably 0.1 to 1%. Again, the halloysite is typically present as the sole nucleating agent in the composition. Also, the polyolefin composition may be formulated from a master batch that contains the nucleating agent.

### DETAILED DESCRIPTION OF THE INVENTION

As with other polymers having nucleating agents dispersed therein, the nucleated polyethylenes of this invention should exhibit enhanced properties, such as improved transparency, surface gloss, impact strength, as well as decreased void formation in the molded articles formed from the polymer compositions and shortened processing cycles.

In accordance with this invention, there is provided a polyethylene containing a unique nucleating agent which provides for a relatively homogenous and fine spherulitic or crystal structure dispersed in the composition as compared in the homogeneity and fineness of such structures in compositions containing other nucleating agents. More particularly, the composition of this invention comprises one or more polyethylenes and an effective nucleating agent comprising one or more finely divided inorganic materials.

Another aspect of this invention relates to the effective nucleating agent of this invention for enhancing the rate of crystallization of polyethylenes, with the agent comprising one or more finely divided inorganic materials.

Yet another aspect of this invention relates to a novel process for enhancing the rate of crystallization of a polyethylene from the melt, which process comprises adding to the polyethylene a crystallization enhancing effective amount of one or more of the nucleating agents disclosed herein.

Several advantages flow from this invention. For example, by speeding up the rate of crystallization, processing times for such complex parts are decreased. Moreover, polyethylenes formed in accordance with this invention are characterized by relatively homogeneous and fine spherulitic structures which have improved optical clarity and as a result have enhanced utility in applications where such clarity is required. Furthermore, the polyethylene compositions of this invention exhibit improved physical properties, including reduced warpage, shrinkage and more controlled coefficients of thermal expansion as a result of the presence of the nucleation agent.

As an essential ingredient, the composition of this invention comprises one or more polyethylenes. The type of preferred polyethylenes employed in the practice of this invention can vary widely. Illustrative of polyethylenes useful in the conduct of this invention are those which are based on ethylene building blocks that include polymeric materials known as high density polyethylene (HDPE), linear low density polyethylene (LLDPE), low density polyethylene (LDPE), copolymers where ethylene is the predominant chemical entity, and polyethylenes polymerized via metallocene catalysts.

The invention also includes an "effective amount" of an "effective nucleating agent". Effective nucleating agents employed in the practice of this invention comprise one or more finely divided inorganic materials of halloysite. In particular, hallosite nanotubular (HNT) clay is the most preferred nucleating agent. Also suitable are halloysite/kaolinite mixes and halloysite/kaolinite mixes containing impurities such as quartz, alunite, iron oxides, cristobalite illites, smectites or combinations thereof in a total amount of less than 3% as these impurities are not deleterious to the nucleating properties of the mixes.

As noted, HNT is the most preferred agent, and it can be used in formulations where polyethylene includes other polymers as blends or alloys or with other modifiers. HNT can contain other naturally occurring impurities in amounts as much as 50% such as kaolinite or other minerals without affecting its performance as a nucleating agent in the invention. Furthermore, it is not necessary to do treating of the material with amines or silanes as is common with other clays that are added to other polymers. Another advantage of formulations of polyethylenes containing HNT is that they are optically clear. Also, HNT can be incorporated into polyethylene compositions via powder blending or as a master batch in various types of polyethylenes that are available.

The amount of nucleating agent added to the polyethylene is an "effective amount". As used herein, an "effective amount" is an amount which is sufficient to improve the homogeneity and/or fineness of spherulitic structures in the polyethylene to any extent. Such amounts will normally correspond to amounts of conventional nucleating agents for other polymers. In the preferred embodiments of the invention, the amount of nucleating agent employed may be in the range of from about 0.01 to about 80 weight percent based on the total weight of polyethylene and agent, and in the particularly preferred embodiments of the invention is from about 0.05 to about 1 weight percent on the aforementioned basis in compositions that are to be molded or extruded. Among these particularly preferred embodiments, more preferred are those embodiments where the amount of nucleating agent employed is from about 0.1 to about 0.5 weight percent based on the total weight of agent and polyethylene.

It has also been found that the use of the present nucleating agents provides unexpected advantages over what is known in the art. For example, the prior use of conventional nucleating agents in small amounts was due to the fact that no additional benefits in nucleation or cycle time was found when higher amounts were used. Also, the use of higher amounts could lead to embrittlement of the polymer. In contrast, the use of the present nucleating agents in amounts of more than 2% results in further nucleating and molding improvements without causing embrittlement. In particular, amounts as high as 3 to 5% or more can be used to achieve the benefits of the invention without detrimentally affecting the properties of the molded polymer. In fact, the use of amounts of 2.5% or 3% or more of the present nucleating agents has been found to result in the unexpected improvement in the strengthening of the molded polymer.

Greater amounts of the nucleating agent can be used when preparing the composition as a master batch. In this situation, between 10 and 80% by weight of the nucleating agent can be used. An appropriate amount of the master batch can be added to other polyethylenes to form the extrudable or moldable compositions having the nucleating effective amount of the nucleating agent therein. Of course, the nucleating agent can be simply added to the polymer directly by itself, or as a mixture or liquid dispersion or in other ways as noted herein or as otherwise known to a skilled artisan.

In preferred embodiments of the invention, the nucleating agents possess a median particle size (d₅₀) of about 0.01 to 1.2 micron and preferably about 0.1 to 20 microns.

As hallyosite is present as a nucleating agent, there is no need to include other, conventional nucleating agents in the present compositions. Accordingly, compounds known to have a nucleating capacity for polyethylenes are to be excluded from the present invention or are to be present in an amount that is less that that useful to act as a nucleating agent. Such excluded compounds include salts of aliphatic monobasic or dibasic acids or arylalkyl acids, such as sodium succinate or aluminum phenylacetate; and alkali metal or aluminum salts of aromatic or alicyclic carboxylic acids such as sodium β-naphthoate and sodium benzoate.

Since the compositions of this invention are useful in forming molded articles, in addition to the above-described essential components, compositions of this invention can include various optional components which are additives commonly employed with the polymers and copolymers of this invention. Such optional components include fillers, plasticizers, impact modifiers, chain extenders, colorants, mold release agents, antioxidants, ultra violet light stabilizers, lubricants, antistatic agents, fire retardants, and the like. These optional components are well known to those of skill in the art, accordingly, only the preferred optional components will be described herein in detail.

A filler can be added to increase the modulus and stiffness of the composition, and provide a more economical composition. Any conventional fibrous or particulate filler can be employed provided that it provides all or a portion of the above-identified functions, and does not otherwise have a deleterious effect on the composition. The fillers may optionally be treated with various coupling agents or adhesion promoters as is known to those skilled in the art. Useful fillers may be selected from a wide variety of minerals, metals, metal oxides, siliceous materials, metal salts, and materials thereof. Examples of such useful fillers include alumina, aluminum hydrates, feldspar, asbestos, carbon black, glass quartz, novaculite and other forms of silica, kaolinite, garnet, mica, saponite, beidellite, calcium hydroxide, and the like. Such fillers are well known materials and are readily available. The foregoing recited fillers are illustrative only and are not meant to limit the scope of the fillers that can be employed in this invention. Fibrous materials such as fiber glass, carbon fibers, boron fibers and polymer fibers are the fillers of choice, and the glass fibers is the filler of choice in the particularly preferred embodiments of this invention.

The quantity of filler employed is not critical and can be varied widely as desired. In the preferred embodiments of this invention, the quantity of filler is up to about 150 weight percent based on the total weight of the polymer component, and in the particularly preferred embodiment is in the range of from about 30 to about 90 weight percent on the same basis.

While not essential, it may be desirable to include an optional plasticizer in the composition of this invention. The plasticizer allows crystallization of the amorphous areas of the composition to continue at lower temperatures than if a plasticizer is not used. This is particularly important in low temperature molding. The plasticizers which can be used with the composition of the present invention are of the type known in the art as useful in polyethylene molding compositions. Such useful plasticizer compositions are well known in the art and accordingly will not be described herein in detail.

The composition of this invention can be further modified by the addition of one or more pigments. Illustrative of useful pigments are iron oxide, cadmium red, rhodamine, chrome yellow, chrome green, and phthalocyanine blue.

A flow aid of talc, silica or nanosilica or the like can also be added to the master batch. The optimum amounts can be determined by routine testing but would typically in the range of between about 2 and 20%.

The composition of this invention can be prepared by blending or mixing the essential ingredients, and other optional components, as uniformly as possible employing any conventional blending means. Appropriate blending means, such as melt extrusion, batch melting and the like, are well known in the art and will not be described here in greater detail. In one useful procedure, the blending procedure can be carried out at elevated temperatures above the melting point of the polymer and the nucleating agent added either alone or as individual components of the agent separately or as a combination of the components in a suitable form as for example, granules, pellets and preferably powders are added to the melt with vigorous stirring. Alternatively, all or a portion of the various components of the nucleating agent can be master batched or preblended with the polymer in the melt and this premixed or master batch added to the polyethylene in the melt in amounts sufficient to provide the desired amount of nucleating agent in the polyethylene product. Stirring is continued until a homogeneous composition is formed. The nucleating agent can also be added to the melt coated on the surface of small particle inert powders which have a high surface to volume ratios. The use of such inert powders, as for example, fused silica, fused alumina, carbon black and aerogels, and hydrogels of silica or alumina, helps to reduce the amount of nucleating agent required to provide optimum results. Blending pressures, and the order of addition of the various components are not critical and may be varied as desired provided that a substantially homogeneous composition results. The blending procedure can be carried out at elevated temperatures, in which case the polymer component is melted and the solid nucleating agent is admixed therewith by vigorously stirring the melt. Similarly, the various solid components can be granulated, and the granulated components mixed dry in a suitable blender, or for example, a Banbury mixer, as uniformly as possible, then melted in an extruder and extruded with cooling.

Alternatively, the composition of this invention can be formulated by dissolving the components in an appropriate inert solvent, after which the solvent is removed by evaporation, or other conventional solvent removing means are employed to provide the composition. The solvent is not critical, the only requirement being that it is inert to the components of the composition, and it is capable of solubilizing the various components, or at least forming dispersions thereof.

The compositions according to the invention can be partially crystalline to highly crystalline, depending on which individual constituents are employed. They are thermoplastic materials from which molded articles of manufacture having valuable properties can be produced by the conventional shaping processes, such as melt spinning, casting, injection molding and extruding. Examples of such moldings are components for technical equipment, apparatus casting, household equipment, sports equipment, components for the electrical and electronics industries and electrical insulations, car components, circuits, fibers, films, piping, gaskets, tank linings, connectors, valve diaphragms, and semi-finished products which can be shaped by machining. The molding compositions according to the invention are outstandingly suitable for specific applications of all types since their spectrum of properties can be modified in the desired direction in many ways.

The compositions according to the invention are outstandingly suitable for the production of thin sheets and panels having valuable properties. The sheets and panels according to the inventions are suitable as coating materials for other materials comprising, for example, wood, glass, ceramic, metal or other plastics, and outstanding strengths can be achieved using conventional adhesion promoters, for example, based on vinyl resins. The sheets and panels can also be laminated with other plastic films and this is preferably effected by joint extrusion, the sheets being bonded in the molten state. The surfaces of the sheets and panels, including those in the embossed form, can be improved or finished by conventional methods, for example by lacquering or by the application of protective films. The compositions of this invention are especially useful for fabrication of extruded films, as for example films for use in packaging of foods or other items. Such films can be fabricated using conventional film extrusion techniques.

### EXAMPLES

The following examples are provided as illustrations of the present invention.

### Example 1

The following is presented to illustrate the effectiveness of HNT as a nucleating agent in PE via T_{cc} transition by DSC technique. In particular, the control HDPE is 5 MFR HDPE homopolymer.

### • Experimental Procedure:

o Sample Reparation: About 2.6% of a master batch containing 37% HNT clay (jet milled Halloysite grade 1415 JM), 5% talc, 18% wax and 40% LDPE was blended with 97.4% HDPE via melt mixing. The master batch was dry mixed with HDPE in the proportion such that the resulting end mixture had clay level of about 1%. The dry blend was injection molded at 190°C and 20 seconds cooling time. Injection molded bars were conditioned for 72 hours. Samples for DSC were taken from the mid section of injection molded bars.
o DSC Testing: A Seiko DSC RDC 220 system was used to obtain the crystallization data. Conditions employed were as follows: nitrogen atmosphere, a constant sample size of about 9-10 mg in a crimped aluminum pan, 20,°C /min heating rate from 30 to 190°C, followed by 1 min hold and then cooling at a rate of 2.5°C / min to observe the T_{cc} transition.

Below are the T_{cc} transition data for a "Control-HDPE" and for the same plastic but containing about 1% of HNT:

| Sample | T_{cc}, °C |
|---|---|
| Control HDPE | 116.1 |
| | 116.6 |
| Same HDPE Containing 1% | 118.1 |
| HNT | 118.4 |

On the average, the HDPE sample containing 1% HNT has about 1.9°C higher T_{cc} transition temperature. This temperature change is very significant, and is a clear sign of very effective nucleation based on the following:
(1) For nylon 6, talc is a well known commercially used nucleating agent and it increases the T_{cc} by about 4-5°C only. [*"Nucleating System for Polyamides"* US Pat. 4, 749, 736 (1988) Y. P. Khanna, G. Chomyn, A. Banerjie, A. C. Reimschuessel*]*
(2) It is well known that the higher the molecular weight (MW) of the polymer, the lower the crystallization rate. In the case of nylon 6, a change of 10,000 in MW is regarded as a major change and it lowers the T_{cc} by only 1°C.
(3) It has been demonstrated that HDPE is the fastest crystallization rate polymer second only to polytetrafluoroethylene. Also, it is documented that the faster the crystallization rate of the polymer, the lesser the effect on its T_{cc} by variables that influence the crystallization [A Barometer of Crystallization Rates of Polymeric Materials, Y.P. Khanna, Polymer Engineering and Science, 30(24), 1615, (1990*)].* Therefore, an increase of 1.9°C for HDPE by HNT is being regarded as a significant achievement.
(4) A ΔT_{cc} ≅ 1.9°C between the HNT containing sample and the control HDPE is obtained at a cooling rate of 2.5°C / min due to instrument limitations. If the measurements were made at a typical cooling rate of 10°C / min, the ΔT_{cc} would be greater than 1.9 °C.
(5) HNT can be added to PE by selecting various grades of PE's as a carrier resin differing in MW and density and further improvements made upon the results presented herein.

### Example 2

As described herein, one of the several benefits of using a nucleating agent is to achieve higher productivity via a shorter molding cycle during fabrication. The comparative examples set forth below demonstrate a substantial reduction of cycle time during Injection Molding of HDPE in the presence of HNT clay, (jet milled Halloysite grade 1415 JM), on commercial scale equipment:

**Comparative Example: Injection Molding of HDPE**

| Composition | HDPE Control | HDPE with about 1% HNT |
|---|---|---|
| Cycle Time, sec | 101 | 77 |
| % Reduction in Cycle Time | 24 | |

While not wishing to be bound by theory, the HNT clay described herein and it use as a nucleating agent significantly reduces the molding cycle time for HDPE.

### Example 3

The use of the HNT clay of Examples 1 and 2 in other polyolefins unexpectedly exhibited similar reductions in molding cycle time. The following comparative examples demonstrate the versatility of the HNT clay in certain polypropylenes.

**Comparative Example: Injection Molding of Impact PP (Grade A)**

| Composition | PP Control | PP with about 1% HNT |
|---|---|---|
| Cycle Time, sec | 130 | 100 |
| % Reduction in Cycle Time | 23 | |

**Comparative Example: Injection Molding of Impact PP (Grade B)**

| Composition | PP Control | PP with about 1% HNT |
|---|---|---|
| Part-1 Cycle Time, sec | 95 | 85 |
| % Reduction in Cycle Time | 11 | |
| Part-2 Cycle Time, sec | 35 | 31 |
| % Reduction in Cycle Time | 11 | |
| Part-3 Cycle Time, sec | 144 | 114 |
| % Reduction in Cycle Time | 21 | |

Thus, reductions in cycle time of at least 10 to 25% can easily be achieved with various polyolefins, and in particular, with polyethylenes, polypropylenes or mixtures or copolymers thereof, with concurrent advantages in the properties and appearance of the molded components.

## Claims

1. In a method of molding or extruding a polyethylene composition, the improvement which comprises formulating the polyethylene composition to contain dispersed therein a nucleating effective amount of a nucleating agent comprising one or more finely divided inorganic materials comprising halloysite in an amount of about 0.01 to about 2 weight percent based on the total weight of polyethylene and agent, such that the melt-crystallization temperature (Tcc) is increased by at least about 1 to 3°C compared to polyethylene compositions that do not contain the nucleating agent.

2. The method according to claim 1, wherein the polyethylene is selected from the group consisting of high density polyethylene (HDPE), linear low density polyethylene (LLDPE), low density polyethylene (LDPE), copolymers where ethylene is the predominant chemical entity, and polyethylene polymerized via metallocene catalysts.

3. The method according to claim 1, wherein the nucleating agent possesses a medium particle size (d₅₀) of at least about 0.01 µm to about 20 µm.

4. The method according to claim 1, with the composition further comprising one or more of a filler, plasticizer, flow aid or pigment.

5. The method according to claim 1, wherein the nucleating agent is halloysite nanotubular clay and is present in an amount of from about 0.1 to 1%.

6. The method according to claim 1 wherein the polyethylene composition is provided from a master batch in which the nucleating agent is present in an amount of 5% to 80%.

7. The method of claim 6, wherein the polyethylene is selected from the group consisting of high density polyethylene (HDPE), linear low density polyethylene (LLDPE), low density polyethylene (LDPE), copolymers where ethylene is the predominant chemical entity, and polyethylene polymerized via metallocene catalysts.

8. The method of claim 1, wherein the nucleating agent is halloysite nanotubular clay having a median particle size (d₅₀) of at least about 0.01 µm to about 20 µm and being present in an amount of from about 0.1 to 2%.

9. In a method of molding a polyethylene composition, the improvement which comprises formulating the polyethylene composition to include therein a nucleating effective amount of a nucleating agent comprising one or more finely divided inorganic materials comprising halloysite in an amount of about 0.01 to about 1 weight percent based on the total weight of polyethylene and agent, with the nucleating agent dispersed in the polyethylene such that the injection molding cycle time is reduced by at least 10 to 25% compared to polyethylene compositions that do not contain the nucleating agent.

10. The method of claim 9, wherein the nucleating agent is halloysite nanotubular clay having a median particle size (d₅₀) of at least about 0.01 µm to about 20 µm and being present in an amount of from about 0.1 to 1%.

11. The method of claim 9, which further comprises formulating the polyethylene composition from a master batch that contains the nucleating agent.

12. The method of claim 9, wherein the halloysite is present as the sole nucleating agent in the composition.

13. The method of claim 9, wherein the composition does not contain salts of aliphatic monobasic or dibasic acids or arylalkyl acids; or alkali metal or aluminum salts of aromatic or alicyclic carboxylic acids.

## Patentansprüche

1. Verfahren zum Formen oder Extrudieren einer Polyethylenzusammensetzung, wobei die Verbesserung das Formulieren der Polyethylenzusammensetzung zum Enthalten einer darin dispergierten für die Keimbildung effektiven Menge eines Keimbildners aufweisend einen oder mehrere fein geteilte anorganische Materialien aufweisend Halloysit in einer Menge von etwa 0,01 bis etwa 2 Gew.-% basierend auf dem Gesamtgewicht von Polyethylen und Keimbildner derart umfasst, dass die Schmelzkristallisationstemperatur (Tec) um wenigstens etwa 1 bis 3 °C gegenüber Polyethylenzusammensetzungen, die den Keimbildner nicht enthalten, erhöht ist.

2. Verfahren nach Anspruch 1, wobei das Polyethylen ausgewählt ist aus der Gruppe bestehend aus Polyethylen hoher Dichte (HDPE), linearem Polyethylen niederer Dichte (LLDPE), Polyethylen geringer Dichte (LDPE), Copolymeren, bei denen Ethylen die vorherrschende chemische Entität ist, und Polyethylen, dass mittels Metallocene-Katalysatoren polymerisiert ist.

3. Verfahren nach Anspruch 1, wobei der Keimbildner eine mittlere Partikelgröße (d₅₀) von wenigstens ungefähr 0,01 µm bis ungefähr 20 µm hat.

4. Verfahren nach Anspruch 1, wobei die Zusammensetzung weiter einen oder mehrere Füllstoffe, Weichmacher, Fließhilfsmittel oder Pigmente aufweist.

5. Verfahren nach Anspruch 1, wobei der Keimbildner nanotubulärer Halloysit-Ton und in einer Menge von etwa 0,1 bis 1 % anwesend ist.

6. Verfahren nach Anspruch 1, wobei die Polyethylenzusammensetzung aus einem Masterbatch bereitgestellt wird, in dem der Keimbildner in einer Menge von 5 % bis 80 % vorhanden ist.

7. Verfahren nach Anspruch 6, wobei das Polyethylen ausgewählt ist aus der Gruppe bestehend aus Polyethylen hoher Dichte (HDPE), linearem Polyethylen niederer Dichte (LLDPE), Polyethylen geringer Dichte (LDPE), Copolymeren, bei denen Ethylen die vorherrschende chemische Entität ist, und Polyethylen, dass mittels Metallocene-Katalysatoren polymerisiert ist.

8. Verfahren nach Anspruch 1, wobei der Keimbildner nanotubulärer Halloysit-Ton mit einer medianen Partikelgröße (d₅₀) von wenigstens etwa 0,01 µm bis etwa 20 µm und in einer Menge von etwa 0,1 bis 2 % vorhanden ist.

9. Verfahren zum Formen einer Polyethylenzusammensetzung, wobei die Verbesserung das Formulieren der Polyethylenzusammensetzung zum Enthalten einer für die Keimbildung effektiven Menge eines Keimbildners aufweisend einen oder mehrere fein geteilte anorganische Materialien aufweisend Halloysit in einer Menge von etwa 0,01 bis etwa 1 Gew.-% basierend auf dem Gesamtgewicht von Polyethylen und Keimbildner umfasst, wobei der Keimbildner derart im Polyethylen dispergiert ist, dass die Spritzgießen-Taktzeit gegenüber Polyethylenzusammensetzungen, die den Keimbildner nicht enthalten, um wenigstens 10 bis 25 % verringert ist.

10. Verfahren nach Anspruch 9, wobei der Keimbildner nanotubulärer Halloysit-Ton mit einer medianen Partikelgröße (d₅₀) von wenigstens etwa 0,01 µm bis etwa 20 µm und in einer Menge von etwa 0,1 bis 1 % vorhanden ist.

11. Verfahren nach Anspruch 9, das weiter das Formulieren der Polyethylenzusammensetzung von einem Masterbatch, das den Keimbildner enthält, aufweist.

12. Verfahren nach Anspruch 9, wobei das Halloysit als einziger Keimbildner in der Zusammensetzung anwesend ist.

13. Verfahren nach Anspruch 9, wobei die Zusammensetzung keine Salze aliphatischer ein- oder zweibasischer Säuren oder Aryl-Alkyl-Säuren oder Alkalimetalle oder Aluminiumsalze von aromatischen oder alicyclischen Carboxylsäuren enthält.

## Revendications

1. Dans un procédé de moulage ou d'extrusion d'une composition de polyéthylène, l'amélioration qui comprend le fait de formuler la composition de polyéthylène pour qu'elle contienne à l'état dispersé une quantité de nucléation efficace d'un agent de nucléation comprenant une ou plusieurs matières inorganiques finement divisées comprenant une halloysite en une quantité d'environ 0,01 à environ 2 % en poids, basés sur le poids total du polyéthylène et de l'agent, tant et si bien que l'on obtient une élévation de la température de cristallisation de la masse fondue (Tcc) à concurrence d'au moins environ 1 à 3 °C par rapport à celle de compositions de polyéthylène qui ne contiennent pas l'agent de nucléation.

2. Procédé selon la revendication 1, dans lequel le polyéthylène est choisi parmi le groupe constitué par du polyéthylène haute densité (HDPE), du polyéthylène linéaire basse densité (LLDPE), du polyéthylène basse densité (LDPE), des copolymères dans lesquels l'éthylène représente l'entité chimique dominante, et du polyéthylène polymérisé via des catalyseurs de type métallocène.

3. Procédé selon la revendication 1, dans lequel l'agent de nucléation possède une granulométrie moyenne (d₅₀) d'au moins environ 0,01 µm à environ 20 µm.

4. Procédé selon la revendication 1, dans lequel la composition comprend en outre un ou plusieurs éléments choisis parmi le groupe comprenant une matière de charge, un plastifiant, un adjuvant de l'écoulement ou un pigment.

5. Procédé selon la revendication 1, dans lequel l'agent de nucléation est une argile nanotubulaire d'halloysite et est présent en une quantité d'environ 0,1 à 1 %.

6. Procédé selon la revendication 1, dans lequel la composition de polyéthylène est fournie à partir d'un mélange-mère dans lequel l'agent de nucléation est présent en une quantité de 5 % à 80 %.

7. Procédé selon la revendication 6, dans lequel le polyéthylène est choisi parmi le groupe constitué par du polyéthylène haute densité (HDPE), du polyéthylène linéaire basse densité (LLDPE), du polyéthylène basse densité (LDPE), des copolymères dans lesquels l'éthylène représente l'entité chimique dominante, et du polyéthylène polymérisé via des catalyseurs de type métallocène.

8. Procédé selon la revendication 1, dans lequel l'agent de nucléation est une argile nanotubulaire d'halloysite possédant une granulométrie moyenne (d₅₀) d'au moins environ 0,01 µm à environ 20 µm et est présent en une quantité d'environ 0,1 à 2 %.

9. Dans un procédé de moulage d'une composition de polyéthylène, l'amélioration qui comprend le fait de formuler la composition de polyéthylène de façon à y inclure une quantité efficace de nucléation d'un agent de nucléation comprenant une ou plusieurs matières inorganiques finement divisées comprenant de l'halloysite en une quantité d'environ 0,01 à environ 1 % en poids, basés sur le poids total du polyéthylène et de l'agent, l'agent de nucléation étant dispersé dans le polyéthylène tant et si bien que l'on obtient une réduction du temps de cycle de moulage par injection à concurrence d'au moins 10 à 25 % par rapport à celui des compositions de polyéthylène qui ne contiennent pas l'agent de nucléation.

10. Procédé selon la revendication 9, dans lequel l'agent de nucléation est une argile nanotubulaire d'halloysite possédant une granulométrie moyenne (d₅₀) d'au moins environ 0,01 µm à environ 20 µm et est présent en une quantité d'environ 0,1 à 1 %.

11. Procédé selon la revendication 9, qui comprend en outre la formulation de la composition de polyéthylène à partir d'un mélange-mère qui contient l'agent de nucléation.

12. Procédé selon la revendication 9, dans lequel l'halloysite est présente à titre d'agent de nucléation unique dans la composition.

13. Procédé selon la revendication 9, dans lequel la composition ne contient pas des sels d'acides monobasiques ou dibasiques aliphatiques ou d'acides arylalkyliques ou des sels d'aluminium ou de métaux alcalins d'acides carboxyliques aromatiques ou alicycliques.
